# EUROPEAN PATENT SPECIFICATION

(11) **EP 2 554 351 B1**
(45) Date of publication and mention of the grant of the patent: **01.05.2019**
(21) Application number: 12004408.6
(22) Date of filing: 12.06.2012
(51) Int. Cl.: B29C 48/00, B29C 44/18, B29C 44/32, B29C 44/50, B29C 48/14, B29C 48/06, B29K 75/00, B29L 9/00

(54) **Method and a device for manufacturing insulation panels**
Verfahren und Vorrichtung zur Herstellung von Dämmtafeln
Procédé et dispositif de fabrication de panneaux d'isolation

(30) Priority: 02.08.2011 BE 201100478
(43) Date of publication of application: 06.02.2013
(73) Proprietor: OROPLASTIC, NAAMLOZE VENNOOTSCHAP, B-8780 Oostrozebeke (BE)
(72) Inventor: Vanyzere, Luc, 8780 Oostrozebeke (BE); Vanyzere, Pieter, 8780 Oostrozebeke (BE)
(74) Representative: Donné, Eddy

(56) References cited:
- EP-A1- 0 044 882
- CA-A1- 2 447 745
- DE-A1- 3 338 071
- DE-A1- 10 035 649
- DE-A1- 10 107 211
- DE-U1- 20 301 741
- GB-A- 2 287 491
- US-A1- 2006 272 257

## Description

The present invention relates to a method and a device for manufacturing insulation panels.

More specifically the invention is intended for flat insulation panels, i.e. with a thickness that is less than approximately one third of the width, that primarily consist of a foam core with a rigid shell that makes the panels rigid and workable.

Thanks to their rigid shell, these types of panels are rigid enough to be easy to use for insulating walls and ceilings of buildings, and other insulation applications, while they are relatively light and insulate well due to their foam core.

These types of panels, especially when they are strong enough, are also suitable for a construction-technical function, in addition to their insulating action, for example as a partition wall in all kinds of construction works, whereby they can be considered as combined insulation-construction panels.

The rigid shell is often made of PVC or polypropylene, and the foam core is made of polyurethane (PUR) foam.

Traditionally there are two methods for manufacturing such panels.

A first traditional method starts with a foam core of the desired format, to which the rigid shell, in the form of a sheet material or formed profiles, is affixed in parts.

In a second traditional method, the shell is made in long lengths by extrusion and is sawn or cut to the desired size. In a piece of shell, if applicable formed by two or more partial shells, a foam-forming substance is then introduced that forms foam in situ and fills the cavity of the shell with foam.

In both traditional methods, the core and the shell can be manufactured in separate successive steps.

Further processing stages are often required to obtain the shape of a panel precisely as desired.

This leads to a relatively high production cost and a relatively low production capacity.

Also it is not easy with either method to make the core and shell exactly the same size, certainly not without further processing stages.

A further disadvantage is that with the traditional methods, the quality of the panels is not very constant in terms of the precise dimensioning and with regard to the distribution of foam over a panel, and that this quality is not easy to control and adjust.

A further method to produce foam-filled profiles is disclosed in DE 10035649, wherein a profile with an opening is filled with foam forming substance after extrusion, after which the opening in the profile is closed, either by providing a lid or closing sheet, or by the elasticity of the shell material itself.

A further method to produce foam-filled profiles is disclosed in DE 10107211.

The purpose of the present invention is to provide a solution to at least one of the aforementioned and other disadvantages by providing a method for manufacturing insulation panels that comprise a foam core with a rigid shell, according to claim 1.

The invention has the advantage that, by cutting away a part of the shell, a sufficiently large opening is provided for the foam entry.

An additional calibration of the shell after extrusion, but before the liquid foam-forming substance is introduced, may also be desirable.

This has the advantage that it is a continuous process for making an extrusion of the core with the shell, after which the panels only need to be separated to size from the extrusion.

Moreover this method is easy to implement.

This method also enables the quality to be easily controlled, and the sizes of the core and the shell can very easily fit one another.

On account of the continuous method, a much more constant quality is obtained.

No subsequent processing stages are required either.

Moreover a large production capacity and a corresponding low production cost is possible.

In a preferred variant, the closing is done simultaneously with the calibration.

As a result, the opening is closed while the shell is still partially plastically deformable, so that this is easier. Also no extra closing device needs to be used, because the calibration device also ensures the closing.

In a further preferred variant, not according to the invention, the shell is extruded with a shape or size that takes account of a shape or size change of the shell during the cutting and/or closing of the opening so that the desired shape of the shell in the insulation panel is obtained.

In a further preferred variant, not according to the invention, the shell is extruded in a size that is larger than necessary for the shell of the insulation panel, whereby the size of the shell is reduced by the opening being closed, such that the edges of the opening overlap one another after the opening is closed.

According to the invention, the opening is obtained by a closed shell being extruded whereby an opening is made in the shell after extrusion.

In a variant not according to the invention, the opening in the shell is obtained during extrusion.

In a further preferred variant, the cross-section of the shell upon extrusion and the location of the opening are such that the edges of the opening overlap one another after closing the opening.

This has the advantage that the edges can be pressed together by the pressure of the expanding foam-forming mass, such that the opening can already be entirely or partially closed without aids for the seal.

Such advantages, as well as the advantage that no means are required to hold the edges of the opening together after the opening has been closed, are present in the variant in which the edges of the opening are provided with a click connection, and this click connection is clicked together when the opening is closed.

According to the invention, the shell is extruded in a size that is larger than necessary for the shell of the insulation panel, whereby the size of the shell is reduced because the opening is made by cutting open the extruded shell, whereby a quantity of material is removed from the shell.

In a further preferred variant, not according to the invention, the shell is extruded as two separate parts that are brought together later.

In a preferred variant, a tape is used to close the opening or improve the seal of an opening closed in another way, whereby this tape is preferably affixed to the inside of the shell, and is introduced through the opening before it is closed.

This tape ensures on the one hand that the opening is closed, at least partially because the tape blocks the opening, and that, with openings that are already closed where there can still be a seam, the foam cannot escape through the seam along which the opening is closed. By applying the tape to the inside, the tape is pushed against the opening by the expanding foam.

In a further preferred variant the foam-forming substance comprises a mixture of polyurethane-forming compounds and/or the shell comprises PVC or polypropylene, or primarily consists of it.

This has the advantage that these compounds are cheap and widely available, that can easily be processed into a foam, and that a foam is formed with good insulating properties that last.

These materials are also chemically resistant to many products, such that they stay impenetrable for a very long time and preserve the same appearance.

The invention also relates to a device for manufacturing insulation panels that comprise a foam core with a rigid shell, according to claim 6.

With the intention of better showing the characteristics of the invention, preferred variants of the method and the device according to the invention are described hereinafter by way of an example, without any limiting nature, with reference to the accompanying drawings, wherein:
figure 1 schematically shows a side view of an embodiment of a device for a variant of a method for manufacturing insulation panels according to the invention, part of which has been cut away;
figure 2 shows a view of a part of the device of figure 1, indicated by II-II;
figures 3 to 5 show alternatives of the form of the part, that is indicated in figure 1 by F3, F4, F5, of the insulation panels produced by means of the method of figures 1 and 2;
figure 6 schematically shows a side view of an alternative embodiment, not according to the invention, of the device according to figure 1;
figure 7 shows a view of a part of the device of figure 2, indicated by VII-VII;
figure 8 schematically shows a side view of an alternative embodiment, not according to the invention, of the device according to figure 1; and
figure 9 shows a view of a part of the device of figure 2, indicated by IX-IX.

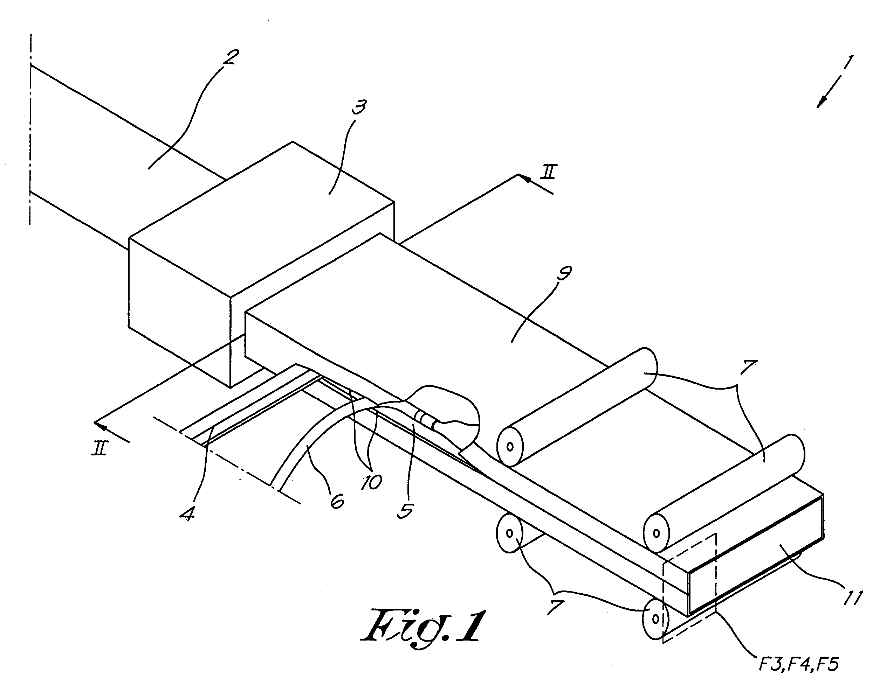

The device 1 in figure 1 primarily comprises an extruder 2 with an extrusion head 3, a blade 4 that is placed such that it can cut an opening 5 in the product coming out of the extruder, a supply pipe 6 for the foam-forming substance that is placed after the blade 4 in the extrusion direction P, and cylindrical rollers 7 that are positioned such that a product coming out of the extruder 2 can be guided between them.

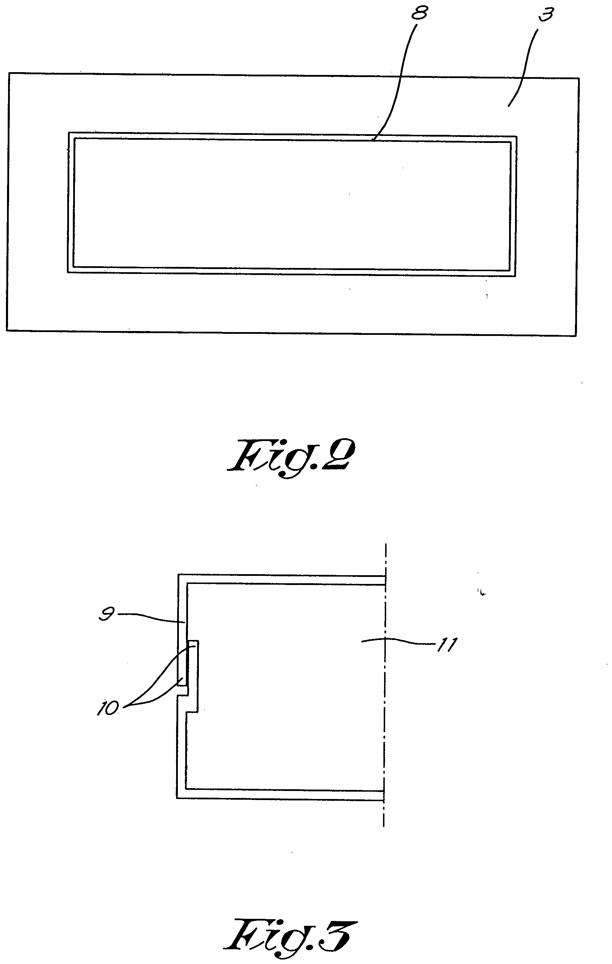

The die slit 8 in the extrusion head 3 cannot be seen in this drawing, but is shown in figure 2.

The device 1 also comprises a saw, not shown, positioned at some distance from the extruder 2.

The use of the device 1, for the implementation of a method according to the invention, is simple and as follows.

When the extruder 2 is operating, PVC granules are guided into the extruder 2. The extruder 2 heats these PVC granules such that they form a soft and plastic PVC mass. The extruder 2 transports the heated plastic PVC to the extrusion head 3 and builds up an extrusion pressure.

The PVC is pressed through the die slit 8, whereby the PVC takes on the shape of the die slit, which corresponds to the desired shape of a shell 9 to be made for an insulation panel.

At the exit side of the extrusion head 3 the PVC leaves the extrusion head 3, thereby forming an extrusion of a shell 9. Immediately after leaving the extrusion head 3, an opening 5 is cut into the extrusion by the blade 4.

The edges 10 of the opening 5 of the extruded shell 9 are now guided around the supply pipe 6 for the foam-forming substance, such that it protrudes through the opening 5 into the shell. Guiding elements can be provided to guide the edges 10 around the supply pipe 6.

The side of the shell 9 is cut away and removed, so that an opening occurs whose edges are far enough apart to go around the supply pipe 6.

During extrusion, a foam-forming substance flows out of the supply pipe 6 into the shell 9, that transforms into a foam and forms the core 11 after hardening.

After the edges 10 of the opening 5 have passed the supply pipe 6, they are guided between the rollers 7 and thereby pressed against one another, such that the opening 5 closes, whereby in this case the hardening foam ensures that the edges 10 remain together.

The rollers 7 are also used to calibrate the extrusion formed, i.e. to make the extrusion the exact size and shape.

In order to make insulation panels, parts of the desired length of the extrusion thus obtained are sawn off.

As shown in figure 3, the edges 10 can also overlap, such that the seal of the closed opening 5 is better.

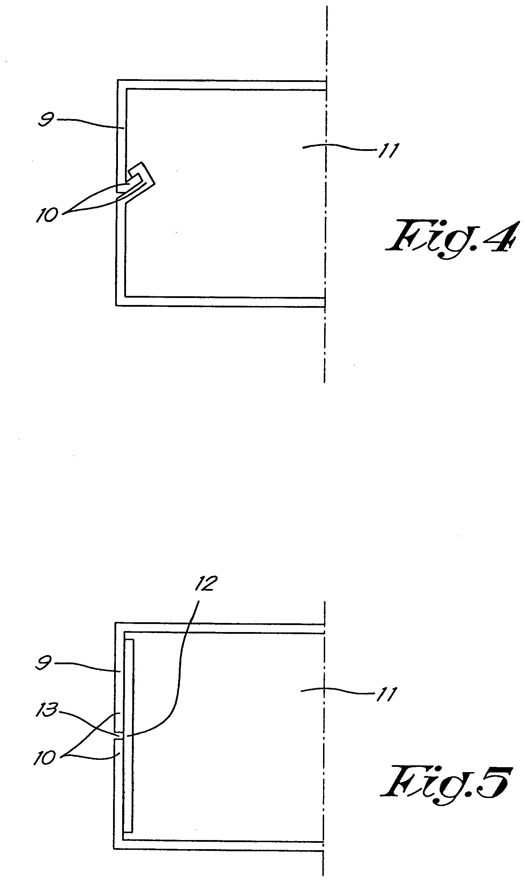

Figure 4 shows that the edges 10 can be provided with a click connection, such that the seal is improved, and after closing the opening 5 the edges 10 are also held together more easily and more reliably.

Figure 5 shows a tape 12 that is affixed during the manufacture of the extrusion of panel material through the opening 5, and seals a split 13 remaining between the edges 10, and in this way closes the opening 5.

The above description and drawings describe a closed shell 9 that is formed by extrusion and then provided with an opening 5.

It is also possible to form an opening 5 during extrusion by making the shape of the die slit 8 as such.

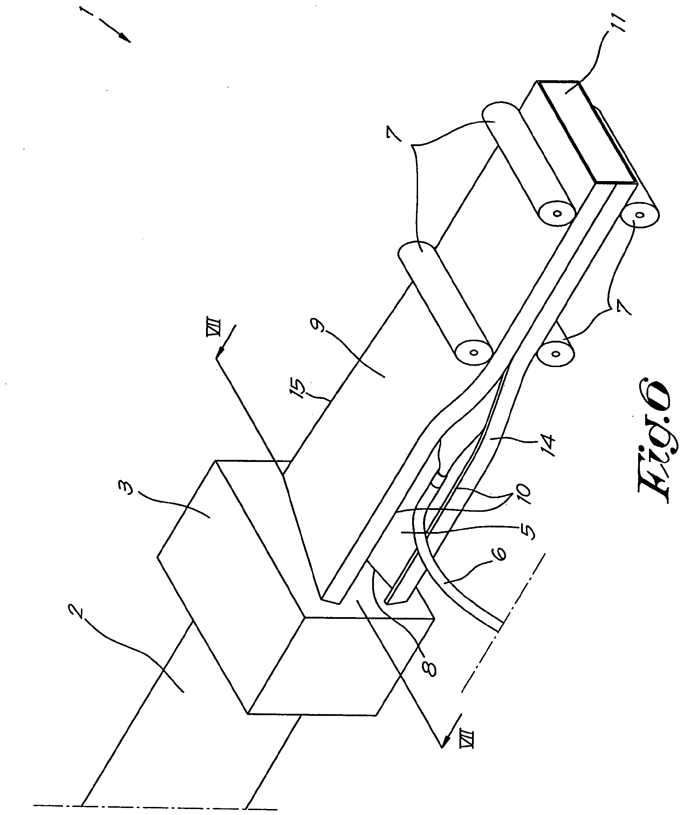

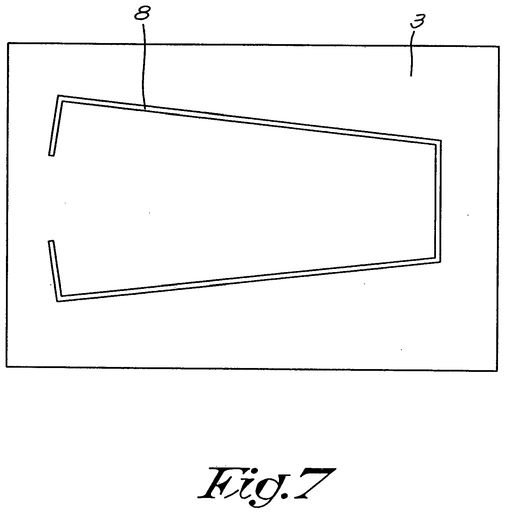

This is shown in figures 6 and 7.

Here the device 1 differs from the device 1 described above because there is no blade 4 to make an opening 5. Instead of this there is a die slit 8 that is such that a shell 9 is formed with an opening 5 by extrusion.

In this case but not necessarily combined, the die slit 8 is also of such a shape that the shell 9 formed does not have the shape desired for the final insulation panel, but the side 14 where the opening 5 is located, is wider than the opposite side 15, so that an operation in which the opening 5 is closed simultaneously, and the shell 9 as formed by extrusion is slightly deformed in order to achieve its final desired shape.

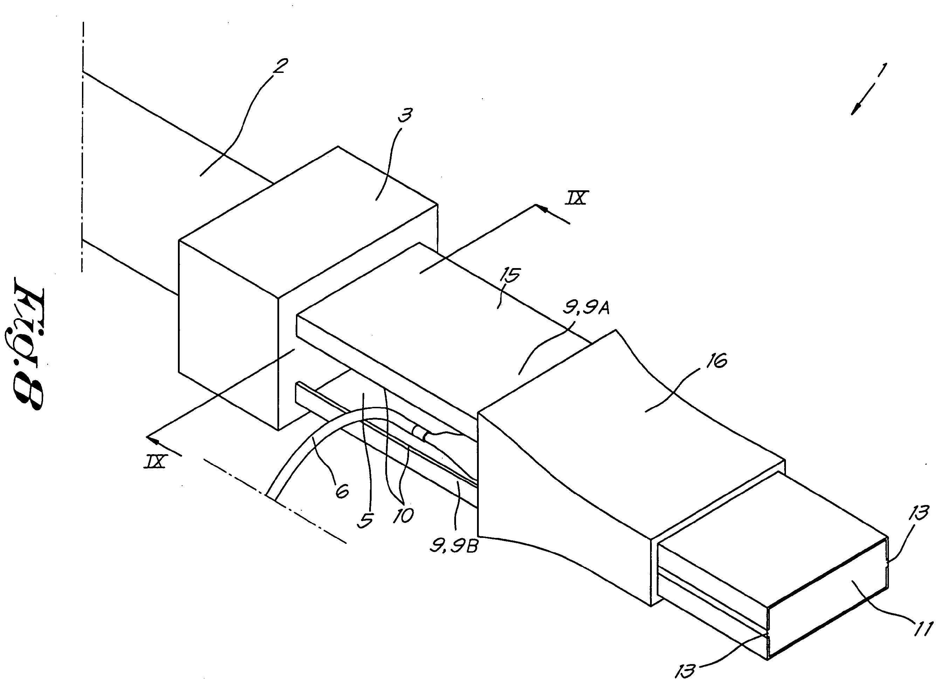

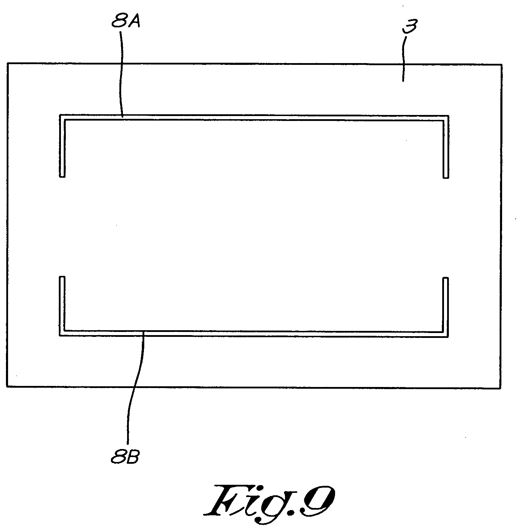

Figures 8 and 9 show an alternative device 1 with accompanying method, not according to the invention.

In this device 1, compared to the device of figure 6, there are no rollers 7, but instead of this there is a fixed template 16.

Instead of a single die slit 8, in this embodiment there are two die slits 8A and 8B.

The operation of the device 1 is largely similar to that of the device 1 described earlier, with the difference that in this case the shell 9 is extruded as two separate partial shells 9A and 9B and has two openings 5.

Then the two partial shells 9A and 9B are brought together, not by rollers 7 but by the fixed template 16, whereby the openings 5 are partially closed.

Hereby the openings 5 are not completely pressed shut. The possible escape of the expanding foam is thereby prevented by the wall of the template 16. The shell 9 then only largely encloses, instead of fully encloses, the foam core 11.

It is also possible to completely press the openings 5 closed and even to have the edges 10 overlap one another. As a result, different thicknesses of insulation panels can easily be manufactured with the same extruder, by the edges 10 overlapping to a greater or lesser extent.

This can be achieved by constructing a partial shell 9A, somewhat smaller than the other partial shell 9B, so that they can slide into one another.

The device 1 must be long enough, in combination with the extrusion speed and any cooling, to allow sufficient time for the PVC from which the shell 9 is made to gain sufficient rigidity by solidifying, and to allow sufficient time for the foam-forming substance, for example PUR, to expand and harden, before the insulation panels are separated from the extrusion.

The hardening and solidification must not necessarily be fully completed at that time, but in any case sufficiently advanced so that the insulation panels, after they have been sawn off the extrusion, preserve their shape and size.

This time depends on the precise formulation of the foam-forming substance, and can also be adapted by adapting the formulation.

As of the moment that the shell 9 leaves the extrusion head 3, it is supported in order to prevent sagging. This is of course particularly critical just after leaving the extrusion head 3, when the shell 9 material has not yet completely solidified. This support is done, for example, by a table, not shown in the drawings, with rollers or in other ways known in this field.

Between the extruder and the supply pipe 6, the shell 9 or the partial shells 9A, 9B, which together form the shell 9, undergo a separate calibration, which is not shown in the drawings. This calibration can be combined with cooling.

Although a rectangular shape of the shell 9 is described in the above description, after closing the opening 5, the shell can of course have other shapes, and can be provided with tongues and grooves to enable the joining of shaped insulation panels, and with desired profiling of the surfaces.

The present invention is by no means limited to the embodiment described as an example and shown in the drawings, but such a method and device can be realised in different variants, without departing from the scope of the invention as defined by the claims.

## Claims

1. Method for manufacturing insulation panels that comprise a foam core (11) with a rigid complete or partial shell (9), wherein an extrusion of panel material, that comprises the said core (11) and the said shell (9), is first manufactured, from which insulation panels are then separated, whereby the extrusion is manufactured in a continuous way by the shell (9) being formed by an extrusion process, whereby this shell (9) is provided with an opening (5) during or after extrusion, whereby a liquid foam-forming substance is then introduced into the shell (9) via this opening (5), after which the shell (9) with the foam-forming substance is exposed to conditions that enable the foam to form and harden, so as to form the core (11), and is calibrated, whereby after the liquid foam-forming substance has been introduced into the shell through the opening (5), the opening (5) in the shell (9) provided with the foam-forming substance or foam is closed, whereby the opening (5) in the shell (9) is obtained by a closed shell (9) being extruded, and an opening (5) is made in the shell (9) after extrusion, whereby the shell (9) is extruded in a size that is larger than necessary for the shell (9) of the insulation panel, whereby the size of the shell (9) is reduced because the opening (5) is made by cutting open the extruded shell, whereby a quantity of material is removed from the shell (9) .

2. Method according to claim 1, wherein the insulation panels are combined insulation-construction panels with a rectangular cross-section and a thickness that is less than 33% of the width of the panels.

3. Method according to claim 1, wherein the opening (5) is cut in the shell (9) by a blade (4).

4. Method according to any one of the previous claims, wherein a tape (12) is used to close the opening (5) or to improve the seal of an opening (5) closed in another way.

5. Method according to claim 4, wherein the tape (12) is affixed to the inside of the shell (9), introduced through the opening (5) before the opening (5) is closed.

6. Device (1) for manufacturing insulation panels that comprise a foam core (11) with a rigid shell (9), whereby the device (1) comprises an extruder (2) for continually extruding the shell (9), wherein the device (1) is equipped to manufacture a shell (9) without a core (11) and with an opening (5), that the device (1) is provided with means (6) to introduce a foam-forming substance into this shell (9) through the opening (5), wherein the device (1) is provided with means to calibrate a shell filled with foam or a foam-forming substance, and wherein the device (1) is provided with means to close the opening (5), wherein the device is provided with means (4) for making an opening (5) in an extruded shell (9), the means (4) are configured to cut open the extruded shell, whereby a quantity of material is removed from the shell (9).

## Patentansprüche

1. Verfahren zur Herstellung von Dämmplatten, die einen Schaumkern (11) mit einer starren vollständigen oder teilweisen Umhüllung (9) umfassen, wobei zuerst ein Extrudatstrang aus Plattenmaterial, der den besagten Kern (11) und die besagte Umhüllung (9) umfasst, hergestellt wird, woraus dann Dämmplatten abgetrennt werden, wobei der Extrudatstrang auf kontinuierliche Weise hergestellt wird, indem die Umhüllung (9) durch einen Extrusionsvorgang gebildet wird, wobei diese Umhüllung (9) während oder nach dem Extrudieren mit einer Öffnung (5) versehen wird, wobei dann eine flüssige schaumbildende Substanz durch diese Öffnung (5) in die Umhüllung (9) eingebracht wird, wonach die Umhüllung (9) mit der schaumbildenden Substanz Bedingungen ausgesetzt wird, die Schaumbildung und -Härtung ermöglichen, um den Kern (11) zu bilden, und kalibriert wird, wobei, nachdem die flüssige schaumbildende Substanz durch die Öffnung (5) in die Umhüllung eingebracht worden ist, die Öffnung (5) in der mit der schaumbildenden Substanz oder dem Schaum versehenen Umhüllung (9) geschlossen wird, wobei die Öffnung (5) in der Umhüllung (9) erhalten wird, indem eine geschlossene Umhüllung (9) extrudiert wird und nach dem Extrudieren eine Öffnung (5) in die Umhüllung (9) gemacht wird, wobei die Umhüllung (9) in einer Größe extrudiert wird, die größer ist als für die Umhüllung (9) der Dämmplatte nötig ist, wobei die Größe der Umhüllung (9) reduziert wird, da die Öffnung (5) durch Aufschneiden der extrudierten Umhüllung gemacht wird, wobei eine Materialmenge von der Umhüllung (9) entfernt wird.

2. Verfahren nach Anspruch 1, wobei die Dämmplatten kombinierte Dämm-/Bauplatten mit einem rechteckigen Querschnitt und einer Dicke, die weniger als 33% der Breite der Platten beträgt, sind.

3. Verfahren nach Anspruch 1, wobei die Öffnung (5) mittels einer Klinge (4) in die Umhüllung (9) geschnitten wird.

4. Verfahren nach einem der vorhergehenden Ansprüche, wobei ein Band (12) verwendet wird, um die Öffnung (5) zu schließen oder die Abdichtung einer auf andere Weise geschlossenen Öffnung (5) zu verbessern.

5. Verfahren nach Anspruch 4, wobei das Band (12) an der Innenseite der Umhüllung (9) angebracht wird, eingebracht durch die Öffnung (5), bevor die Öffnung (5) geschlossen wird.

6. Vorrichtung (1) zur Herstellung von Dämmplatten,, die einen Schaumkern (11) mit einer starren Umhüllung (9) umfassen, wobei die Vorrichtung (1) einen Extruder (2) zum kontinuierlichen Extrudieren der Umhüllung (9) umfasst, wobei die Vorrichtung (1) zur Herstellung einer Umhüllung (9) ohne Kern (11) und mit einer Öffnung (5) ausgerüstet ist, dass die Vorrichtung (1) mit Mitteln (6) zum Einbringen einer schaumbildenden Substanz in diese Umhüllung (9) durch die Öffnung (5) versehen ist, wobei die Vorrichtung (1) mit Mitteln zur Kalibrierung einer mit Schaum oder einer schaumbildenden Substanz gefüllten Umhüllung versehen ist, und wobei die Vorrichtung (1) mit Mitteln zum Schließen der Öffnung (5) versehen ist, wobei die Vorrichtung mit Mitteln (4) zum Herstellen einer Öffnung (5) in einer extrudierten Umhüllung (9) versehen ist, die Mittel (4) dafür ausgelegt sind, die extrudierte Umhüllung aufzuschneiden, wobei eine Materialmenge von der Umhüllung (9) entfernt wird.

## Revendications

1. Procédé pour la fabrication de panneaux d'isolation qui comprennent un corps en mousse (11) muni d'une enveloppe rigide complète ou partielle (9) : dans lequel une extrusion d'une matière faisant office de panneau, qui comprend ledit corps (11) et ladite enveloppe (9), est fabriquée en premier lieu, à partir de laquelle des panneaux d'isolation sont ensuite séparés ; dans lequel l'extrusion est fabriquée d'une manière continue en réalisant l'enveloppe (9) par un procédé d'extrusion ; dans lequel cette enveloppe (9) est munie d'une ouverture (5) pendant ou après l'extrusion ; dans lequel une substance liquide formatrice de mousse est alors introduite dans l'enveloppe (9) via cette ouverture (5) ; après quoi, l'enveloppe (9) avec la substance formatrice de mousse est exposée à des conditions qui permettent d'obtenir une formation et un durcissement de la mousse de façon à former le corps (11), et est calibrée; dans lequel, après avoir introduit la substance liquide formatrice de mousse dans l'enveloppe à travers l'ouverture (5), l'ouverture (5) dans l'enveloppe (9), pourvue de la substance formatrice de mousse ou de la mousse, est fermée ; dans lequel l'ouverture (5) dans l'enveloppe (9) est obtenue via l'extrusion d'une enveloppe fermée (9) et une ouverture (5) est pratiquée dans l'enveloppe (9) après l'extrusion ; dans lequel l'enveloppe (9) est extrudée dans une dimension qui est supérieure à la dimension nécessaire pour l'enveloppe (9) du panneau d'isolation ; dans lequel la dimension de l'enveloppe (9) est réduite par le fait de réaliser l'ouverture (5) par découpe de l'enveloppe extrudée ; dans lequel une quantité de matière est retirée de l'enveloppe (9).

2. Procédé selon la revendication 1, dans lequel les panneaux d'isolation représentent des panneaux combinés d'isolation-construction possédant une section transversale rectangulaire et une épaisseur qui est inférieure à 33 % de la largeur des panneaux.

3. Procédé selon la revendication 1, dans lequel l'ouverture (5) est découpée dans l'enveloppe (9) à l'aide d'une lame (4).

4. Procédé selon l'une quelconque des revendications précédentes, dans lequel un ruban adhésif (12) est utilisé pour fermer l'ouverture (5) ou pour améliorer l'étanchéité d'une ouverture (5) fermée d'une autre manière.

5. Procédé selon la revendication 4, dans lequel le ruban adhésif (12) est fixé du côté interne de l'enveloppe (9), introduit à travers l'ouverture (5) avant la fermeture de l'ouverture (5).

6. Dispositif (1) pour la fabrication de panneaux d'isolation qui comprennent un corps en mousse (11) avec une enveloppe rigide (9) ; dans lequel le dispositif (1) comprend une extrudeuse (2) pour l'extrusion en continu de l'enveloppe (9) ; dans lequel le dispositif (1) est équipé pour fabriquer une enveloppe (9) en l'absence de corps (11) et avec une ouverture (5) ; dans lequel le dispositif (1) est équipé de moyens (6) pour introduire une substance formatrice de mousse dans cette enveloppe (9) à travers l'ouverture (5) ; dans lequel le dispositif (1) est équipé de moyens pour calibrer une enveloppe remplie avec de la mousse ou une substance formatrice de mousse; et dans lequel le dispositif (1) est équipé de moyens pour fermer l'ouverture (5) ; dans lequel le dispositif est équipé de moyens (4) pour pratiquer une ouverture (5) dans une enveloppe extrudée (9), les moyens (4) étant configurés pour pratiquer l'ouverture par découpe de l'enveloppe extrudée ; dans lequel une quantité de matière est retirée de l'enveloppe (9).
